# EUROPEAN PATENT APPLICATION

(11) **EP 1 587 261 A1**
(43) Date of publication of application: **19.10.2005**
(21) Application number: 05251895.8
(22) Date of filing: 29.03.2005
(51) Int. Cl.: H04L 12/56

(54) **Apparatus for requesting channel time allocation (CTA) in a coordinator-based wireless network environment and method for receiving data during allocated channel time in a coordinator-based wireless network**

(30) Priority: 02.04.2004 US 558554 P; 14.04.2004 KR 2004025851; 22.04.2004 KR 2004027856
(71) Applicant: SAMSUNG ELECTRONICS CO., LTD., Suwon-city, Gyeonggi-do (KR)
(72) Inventor: Sung, Hyun-ah, Gwanak-gu Seoul (KR); Kim, In-hwan, Yeongtong-gu Suwon-si, Gyeonggi-do (KR); Bae, Dae-gyu, Yeongton-gu Suwon-si, Gyeonggi-do (KR); Hong, Jin-woo, Yeongton-gu Suwon-si, Gyeonggi-do (KR)
(74) Representative: Waddington, Richard

(57) **Abstract**

An apparatus and method for requesting channel time allocation in a coordinator-based network. The apparatus includes a controller (672) for generating a packet requesting channel time allocation required for reception of data from the coordinator and a transceiver (674) that sends the generated packet to the coordinator (672). The packet includes information identifying that the device sending the packet is the device receiving the data.

## Description

The present invention relates to a wireless networking system and method, and more particularly, to an apparatus and method for requesting channel time allocation (CTA) in a coordinator-based wireless network environment.

With the advancement in communication and network technologies, a wired network environment using wired media such as coaxial or optical cables is evolving into a wireless one using wireless signals in various frequency bands. In line with the transition from wired to wireless technology, a computing device that contains a wireless interface module, enables mobility, and perform specific functions by processing various information ("a wireless network device") is being developed and wireless technologies that enable effective communication between wireless devices on a wireless network are emerging.

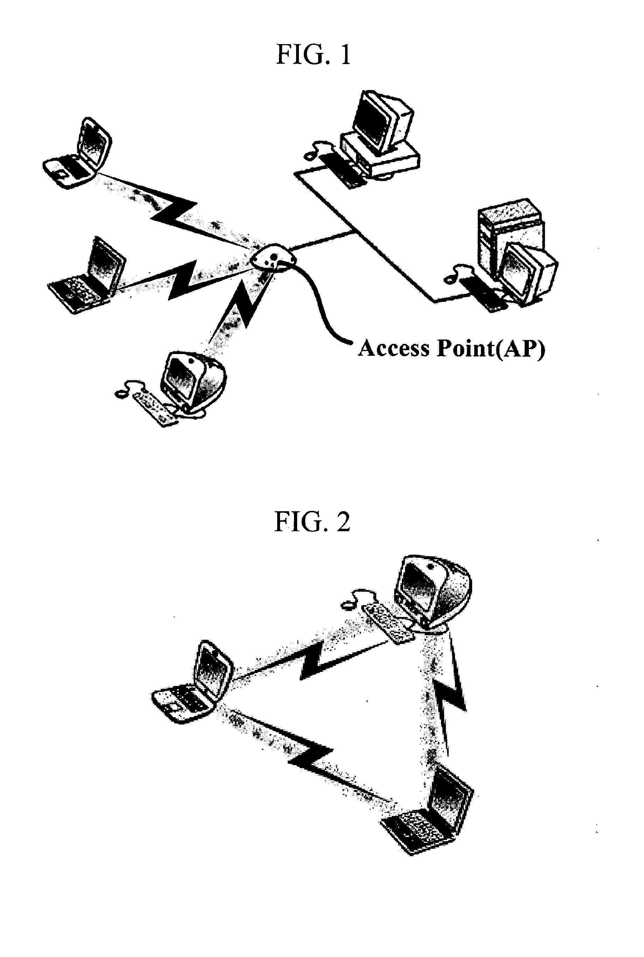

There are two major architectures of wireless networks: infrastructure and ad-hoc networks. The infrastructure network contains an access point (AP) as shown in FIG. 1 whereas the ad-hoc network requires no AP for communication as shown in FIG. 2.

In an infrastructure mode, an AP not only has connectivity to the wired network but also provides communication among wireless network devices within a wireless network. Thus, all data traffic in the infrastructure network is relayed through the AP.

In an ad-hoc mode, wireless network devices within a single wireless network can directly communicate with one another without using an AP.

Such wireless networks can be further classified into two types based on the presence of a coordinator. In one type of network, which is called a 'coordinator-based wireless network, a randomly selected wireless device acts as a coordinator that assigns channel time to other wireless devices within the same wireless network for data transmission, and then the other wireless devices are allowed to transmit data only at the assigned time. As compared to the coordinator-based wireless network, the other type of network allows all network devices to transmit data at any time desired without using a coordinator.

The coordinator-based wireless network is a single independent coordinator-centered network. When there are multiple coordinator-based wireless networks within a certain area, each network has a unique ID to distinguish itself from others.

Thus, while wireless devices can transmit/receive data to/from other network devices during channel time assigned by the coordinator on a coordinator-based network where they belong, they are not allowed to communicate with wireless devices belonging to another coordinator-based network.

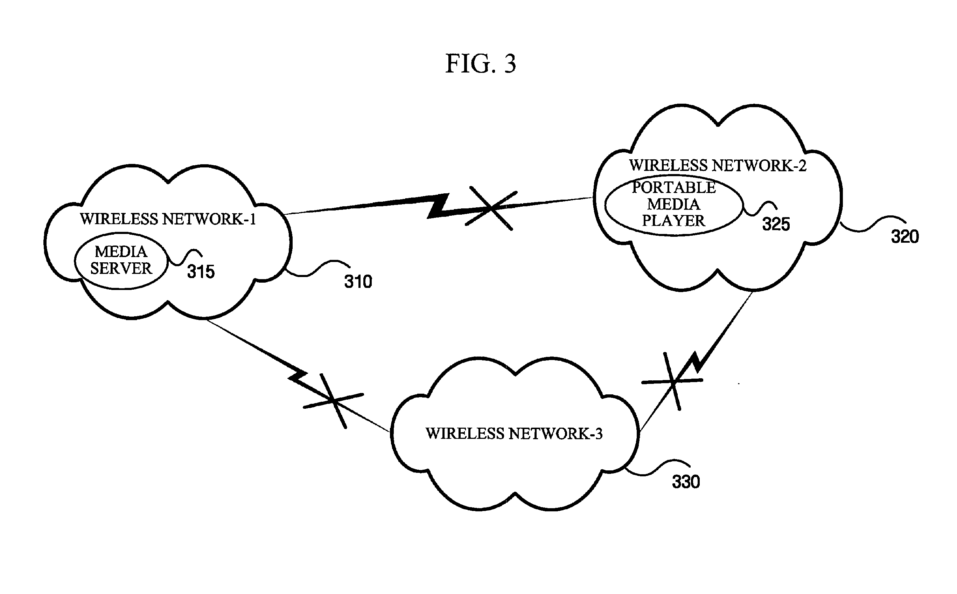

For example, in a home network system containing three coordinator-based wireless networks 310, 320, and 330 as shown in FIG. 3, it is assumed that wireless network-1 310, wireless network-2 320, and wireless network-3 330 are built in a first-floor living room, a second-floor schoolroom, and a first-floor bedroom, respectively.

If a user desires to watch movies stored on a media server 315 in the living room using a portable moving picture player 325 in the schoolroom, then the user cannot watch movies since there is no way to communicate between the wireless network-1 310 and the wireless network-2 320. Thus, to see the movies, the user has to go downstairs to the living room.

This problem may arise due to restriction on range of radio waves, absence of information on another coordinator-based wireless network, and channel time allocation.

To achieve data transmission and reception between wireless network devices belonging to different coordinator-based wireless networks, a novel network topology needs to be configured. In particular, there is a need for a method for requesting CTA in a coordinator-based wireless network to which a wireless network device that receives data belongs. In Wireless Personal Area Networks (WPANs), which are a representative example of a coordinator-based wireless network and complies with the Institute of Electrical and Electronics Engineers (IEEE) 802.15.3 standard, only a wireless network device that desires to transmit data is allowed to request CTA. That is, no network devices that receive or relay data are able to request CTA since they are unaware of information needed for CTA. The IEEE 802.15.3 proposes standards for a PHY layer corresponding to Physical Layer and a Medium Access Control (MAC) layer making up a Data-Link Layer among the seven layers of the Open System Interconnection (OSI) network model developed by the International Organization for Standardization (ISO) for wireless networks.

Thus, in coordinator-based wireless networks such as WPANs, a method for a wireless network device receiving data to request CTA is needed to smoothly accomplish data transmission and reception between wireless network devices in different coordinator-based wireless networks.

The present invention provides a method for allowing a receiving device to request channel time allocation (CTA) by modifying a data format for CTA.

The above stated object as well as other objects, features and advantages, of the present invention will become readily apparent from the following description.

According to the present invention there is provided an apparatus and method as set forth in the appended claims. Preferred features of the invention will be apparent from the dependent claims, and the description which follows.

According to an aspect of the present invention, there is provided an apparatus for requesting CTA in a coordinator-based wireless network including a controller generating a packet requesting CTA required for reception of data from the coordinator and a transceiver that sends the generated packet to the coordinator. Here, the packet contains information identifying that a device sending the packet is a device receiving the data.

The packet may comprise a packet generated by invocation of a message requesting the channel time allocation. In this case, the message may comprise information identifying that the device sending the packet is the device receiving the data.

In addition, the packet may comprise a wireless packet complying with the IEEE 802.15.3 standard.

The transceiver may receive information needed for the channel time allocation.

According to another aspect of the present invention, there is provided a method for receiving data in a coordinator-based wireless network including receiving information on data, transmitting a packet requesting channel time allocation to the coordinator using the information, and receiving the data from the coordinator during channel time allocated.

The packet may comprise a packet generated by invocation of a message requesting the channel time allocation. In this case, the message may comprise information identifying that the device sending the packet is the device receiving the data.

The packet may comprise a wireless packet complying with the IEEE 802.15.3 standard.

For a better understanding of the invention, and to show how embodiments of the same may be carried into effect, reference will now be made, by way of example, to the accompanying diagrammatic drawings in which:
FIG. 1 is an exemplary diagram of a wireless network system operating in an infrastructure mode;
FIG. 2 is an exemplary diagram of a wireless network system operating in an ad-hoc mode;
FIG. 3 is an exemplary diagram illustrating communication between conventional coordinator-based wireless networks;
FIG. 4 is an exemplary diagram of a network system according to an embodiment of the present invention;
FIG. 5 is a diagram of a data format according to an embodiment of the present invention;
FIG. 6 is an exemplary diagram illustrating the configurations of a device and a wired/wireless bridge according to an embodiment of the present invention;
FIG. 7 is an exemplary diagram for explaining a channel time allocation (CTA) mechanism defined in the IEEE 802.15.3 standard;
FIG. 8 shows a format of a channel time request command defined in the IEEE 802.15.3 standard;
FIG. 9 is an exemplary diagram of a network system according to another embodiment of the present invention; and
FIG. 10 is a flowchart illustrating a process for requesting CTA according to an embodiment of the present invention.

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention is described hereinafter with reference to flowchart illustrations of methods according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

For a better understanding of the present invention, a wireless personal area network (WPAN) compliant with the IEEE 802.15.3, and more particularly, a network system for enabling data communication between wireless network devices belonging to different WPANs BY connecting multiple WPANs via a wired backbone based on a MAC layer will now be described as an embodiment of a coordinator-based wireless network.

In a wireless personal area network (WPAN), a wireless network device is called a 'device' and a single network formed by one or more devices is called a `piconet'. Thus, for consistent use of terms, terms defined in WPAN are hereinafter used throughout this specification.

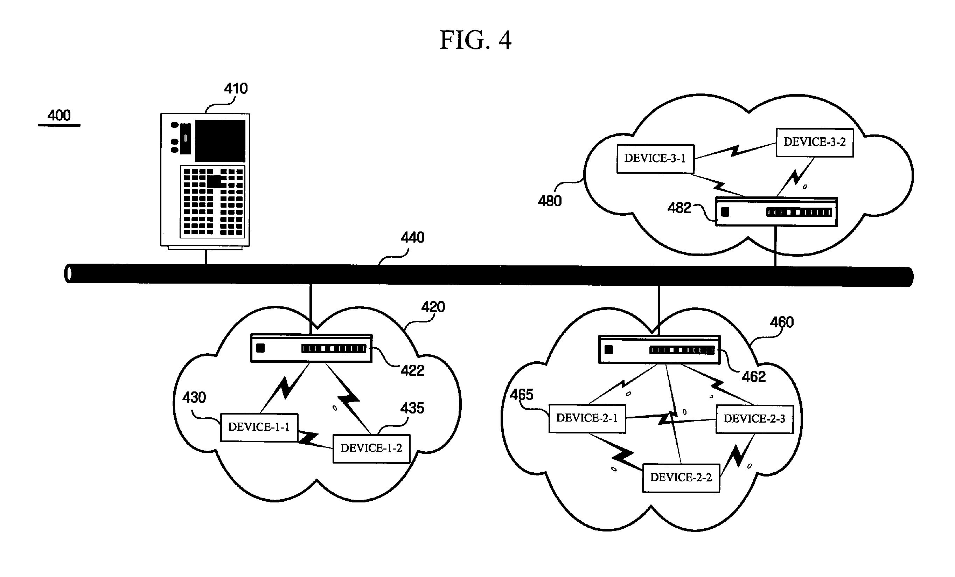

FIG. 4 is an exemplary diagram of a network system 400 according to an exemplary embodiment of the present invention.

Referring to FIG. 4, the network system 400 is comprised of multiple piconets 420, 460, and 480, a wired network 440 connected to the piconets 420, 460, and 480, and repeaters 422, 462, and 482 that connect the piconets 420, 460, and 480 with the wired network 440, respectively. In this case, for clear distinction, the piconets 420, 460, and 480 are hereinafter called first, second, and third piconets 420, 460, and 480, respectively.

Further, a device acting as a coordinator may be selected among devices belonging to each of the first through third piconets 420, 460, and 480, which is hereinafter called a 'Piconet coordinator' or 'PNC'.

Similarly, to more clearly distinguish the repeaters 422, 462, and 482 belonging to the first through third piconets 420, 460, and 480 from one another, they are hereinafter referred to as first, second, and third repeaters 422, 462, and 482, respectively. Each of the first through third repeaters 422, 462, and 482 may include a router, a wired/wireless bridge, a device, or a PNC depending on the type of a network topology. For example, when each of the repeaters 422, 462, and 482 is a wired/wireless bridge, the network system 400 may create an IP subnet such as '192.168.9.x', and each of the first through third piconets 420, 460, and 480 can be identified by its own ID.

The wired network 440 can conform to any wired network protocol based on a communication medium such as coax cable, optical cable, power line, or phone line. The protocol for the wired network 440 may vary depending on a physical environment where the present invention is applied.

According to an exemplary embodiment of the present invention, when a device-1-1 430 desires to communicate with a device-1-2 435, i.e., a communication is made with the same piconet, it has only to comply with a conventional IEEE 802.15.3 standard. However, when the device-1-1 430 wishes to communicate with a device-2-1 465 belonging to the second piconet 460, first, the first repeater 422 receives a wireless packet transmitted by the device-1-1 430 and then generates a wired packet with a structure that is capable of transmitting information contained in the wireless packet. This is because a change in the structure of a communication protocol due to the characteristics of a transmission medium may also cause the structure of a packet to change. The wired packet generated by the first repeater 422 is forwarded to the second repeater 462 through the wired network 440. In this case, the first repeater 422 may broadcast or multicast the wired packet to the second repeater 462 or directly transmit the same only to the second repeater 462.

The second repeater 462 then converts the wired packet received from the first repeater 422 back into the form of a wireless packet compliant with the IEEE 802.15.3 standard, allocates channel time defined in the same standard, and forwards the wireless packet to the device-2-1 465.

A response to the packet transmitted by the device-1-1 430 can be performed between the device-1-1 430 and the first repeater 422, the first repeater 422 and the second repeater 462, the second repeater 462 and the device-2-1 465, or between the device-1-1 430 and the device-2-1 465.

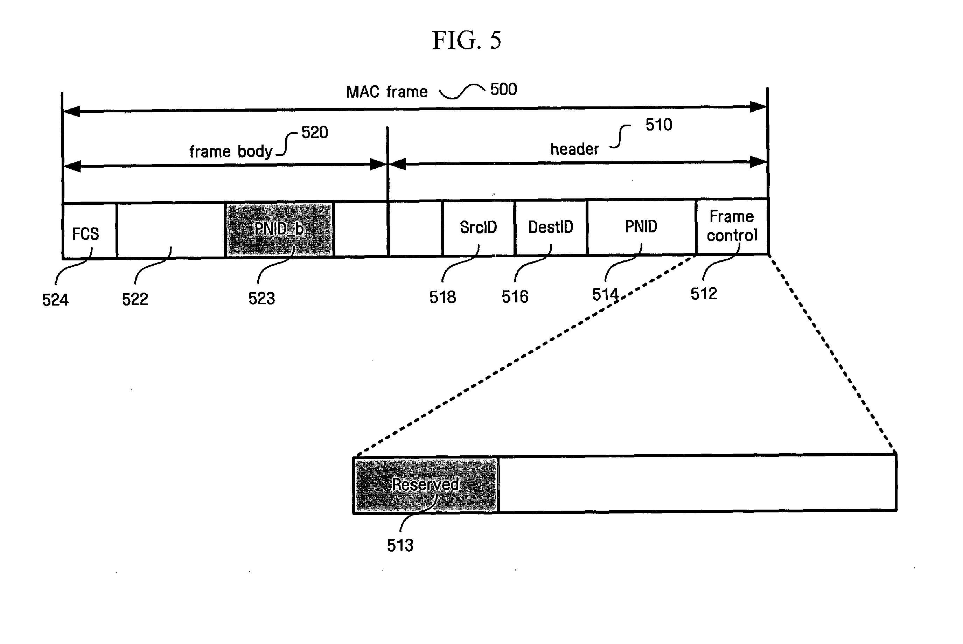

FIG. 5 is a diagram of a data format according to an exemplary embodiment of the present invention.

It is difficult to implement a communication mechanism as described above only with a frame format complaint with the IEEE 802.15.3 standard. Thus, the conventional frame format is modified according to a preferred embodiment. The extent of modifications to the frame format may vary according to the type of the first through third repeaters 422, 462, and 482. Thus, according to a preferred embodiment a new frame format is provided when the first through third repeaters 422, 462, and 482 are a wired/wireless bridge. All piconets, and wired backbone that will be described later, have a single IP subnet. The wired/wireless bridge may act as a device or PNC within a piconet to which the wired/wireless bridge belongs.

Referring to FIG. 5 there is illustrated a modified format of a MAC frame defined in the IEEE 802.15.3 according to an exemplary embodiment of the present invention, in particular, the frame contains a newly created 'PNID_b' information field 523 of a frame body 520 and a 'Reserved' area 513 of a 'frame control' information field in a header 510. Important information fields will now be briefly described.
A MAC frame 500 mainly consists of a frame body 520 and a header 510 containing various types of information of the MAC frame. The frame body 520 contains a payload 522 carrying protocol data unit (PDU) from a layer above a MAC layer in a protocol suite conforming to the IEEE 802.15.3 and a Frame Check Sum (FCS) information field 524 that indicates an error in transmission of a frame. For example, when the upper layer is an application layer, application data may be carried in the payload 522.

The header 510 contains a 'Piconet Identifier' (PNID) information field 514 that specifies an identifier able to identify the appropriate piconet, a 'SrcID' information field 518 to identify a device that transmits the MAC frame, and a 'DestID' information field 516 to identify a destination device that receives the MAC frame. An IEEE 802.15.3-compliant wireless communication scheme allows communication only between devices within the same piconet identified by the 'PNID' information field 514.

Thus, two 'PNID' information fields representing piconet IDs are needed to enable communication between devices within different piconets.

As an exemplary embodiment of the present invention, a separate 'PNID' information field 523 is placed in the frame body 520 and 'PNID' information contained in the frame body 520 is denoted by 'PNID_b' to distinguish itself from that contained in the header 510.

Meanwhile, each wired/wireless bridge needs to determine whether the final destination of a packet received on a piconet where it belongs is a device within the same or different piconet. To achieve this, the 'PNID' and 'PNID_b' information fields 514 and 523 may be predefined as source and destination piconet IDs, respectively, or vice versa. Alternatively, it is possible to use separate information indirectly indicating the source and destination piconet IDs, which is hereinafter called 'transfer mode information'.

The transfer mode information indicates whether a packet is transmitted to or received from devices belonging to the same or a different piconet. The same information may be specified in the 'Reserved' area 513 of the 'frame control' information field 512 contained in the header 510. The IEEE 802.15.3 defines the 'frame control' field and allocates 5 bits for the 'Reserved' area 513.

According to a preferred embodiment of the present invention, 2 bits in the 'Reserved" area 513 are used to represent a piconet ID.

For example, when the 2 bits are represented by '01', the 'PNID' and 'PNID_b' information fields 514 and 523 may specify the designation and source piconet IDs, respectively. Thus, the 'SrcID' information field 518 and the 'DestID' information field 516 specify IDs of destination and source devices belonging to piconets identified by the 'PNID' and 'PNID_b' information fields 514 and 523, respectively.

In addition, when the 2 bits are represented by '10', the 'PNID' and 'PNID_b' information fields 514 and 523 may contain the source and designation piconet IDs, respectively. Thus, the 'SrcID' information field 518 and the 'DestID' information field 516 may contain IDs of source and destination devices belonging to piconets identified by the 'PNID' and 'PNID_b' information fields 514 and 523, respectively.

Lastly, when the 2 bits are represented by '11', the 'PNID' and 'PNID_b' information fields 514 and 523 may contain the same piconet ID, which means that transmission and reception of a packet is made between devices within the same piconet. Thus, the wired/wireless bridges 600 use only transfer mode information to determine whether the received wireless packets will be transmitted to other piconets or discarded.

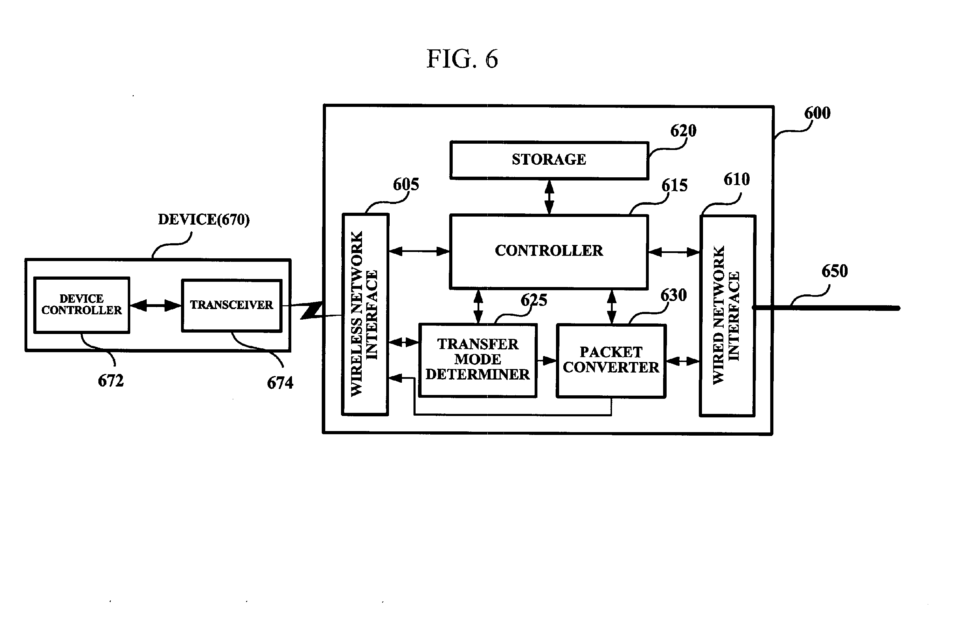

FIG. 6 is an exemplary diagram illustrating the configurations of a device and a wired/wireless bridge according to an exemplary embodiment of the present invention.

The wired/wireless bridge 600 includes a wireless network interface 605 that transmits and receives a wireless packet via a piconet, a wired network interface 610 that is connected to a wired network 650 and transmits and receives a wired packet, a transfer mode determiner 625 that receives the wireless packet from the wireless network interface 605 and determines a transfer mode based on information carried in the wireless packet, a packet converter 630 that converts the wireless packet into a wired packet in order to transmit the same to another piconet through the wired network 650, a storage 620 that stores ID information about other piconets and information about other wired/wireless bridges, and a controller 615 that manages a process occurring among the wireless network interface 605, the wired network interface 610, the transfer mode determiner 625, the packet converter 630, and the storage 620. In this case, the transfer mode determiner 625, the packet converter 630, and the controller 615 may be implemented with a single integrated circuit chip.

The device 670 includes a device controller 672 that creates a wireless packet carrying a MAC protocol data unit consisting of a data frame region and an information frame region, and a transceiver 674 that transmits the created wireless packet.

The operation of the wired/wireless bridge 600 and the device 670 will now be described in detail.

For a better understanding of an embodiment of the present invention, reception of a wireless packet from a piconet by the wired/wireless bridge 600 and reception of a wired packet through the wired network 650 will now be described. The transfer mode information contains the same as that described with reference to FIG. 5. Furthermore, a process for allocating channel time conforms to the IEEE 802.15.3 standard, and it is assumed that channel time has been allocated before the wired/wireless bridge 600 receives the wireless packet from the piconet. The entire network system has the same architecture as shown in FIG. 4.

### 1. Reception of wireless packet

### (1) Communication between devices within the same piconet

For example, when the device-1-1 430 desires to communicate with the device-1-2 435, it is assumed that the device-1-1 430 and the first repeater 422 are the device 670 and the wired/wireless bridge 600 shown in FIG. 6, respectively. First, the device controller 672 of the device 670 sets the value of the 'Reserved' area 513 of the 'frame control' information field 512 contained in the header 510 of the MAC frame 500 to '11' and defines an ID of the first piconet 420 where the device 670 and the device-1-2 435 belong in the 'PNID_b' and 'PNID' information fields 523 and 514, respectively. The device controller 672 also specifies IDs identifying the device-1-2 435 and the device 670 in the 'DestID' information field 516 and the 'SrcID' information field 518, respectively.

The transceiver 674 of the device 670 then broadcasts the wireless packet carrying the MAC frame 500 defined as above, which is then transmitted to the wireless network interface 605 of the wired/wireless bridge 600. The transfer mode determiner 625 extracts the transfer mode information from the wireless packet and then discards the wireless packet since the transfer mode information is represented by '11'. Since the wired/wireless bridge 600 is used for communication with a different piconet, a method for communication within the same piconet 420 preferably complies with the IEEE 802.15.3 standard.

### (2) Communication between devices belonging to different piconets

For example, when the device-1-1 430 desires to communicate with the device-2-1 465 belonging to the second piconet 460, it is assumed that the device-1-1 430 and the first repeater 422 are the device 670 and the wired/wireless bridge 600 shown in FIG. 6, respectively.

First, the device controller 672 of the device 670 sets the value of the 'Reserved' area 513 of the 'frame control' information field 512 to '01' and defines an ID of the first piconet 420 where the device 670 belongs and an ID of the second piconet 460 where the device-2-1 465 belongs in the 'PNID_b' and 'PNID' information fields 523 and 514, respectively. The device controller 672 also specifies IDs identifying the device-2-1 465 and the device 670 in the 'DestID' information field 516 and the 'SrcID' information field 518, respectively.

The transceiver 674 of the device 670 then broadcasts the wireless packet carrying the MAC frame 500 set as above, which is then transmitted to the wireless network interface 605 of the wired/wireless bridge 600. The transfer mode determiner 625 extracts the transfer mode information from the wireless packet and then transmits the wireless packet to the packet converter 630 since the transfer mode information is represented by '01' . The packet converter 630 then converts the wireless packet to a wired packet that conforms to a protocol used to operate the wired network 650. The wired packet contains information on the header 510 and the payload 522 and is transmitted to the wired network interface 610 that in turn transmits the same to wired network 650. In this case, the wired packet may be multicasted or broadcasted or directly transmitted to a wired/wireless bridge in the second piconet 460.

### 2. Reception of wired packet

First, it is assumed that the device-1-1 430 and the first repeater 422 are the device 670 and the wired/wireless bridge 600 shown in FIG. 6, respectively.

The wired network interface 610 of the wired/wireless bridge 600 receives a wired packet from the wired network 650 and transmits the same to the packet converter 630. In this case, the packet converter 630 extracts the transfer mode information from the wired packet, and when the extracted transfer mode information is represented by '01', extracts 'PNID' information from the wired packet in order to check whether it is the same as ID information about a piconet where the wired/wireless bridge 600 belongs. If the two IDs are not identical, the packet converter 630 converts the wired packet into a wireless packet that is then transmitted to the wireless network interface 605. The wireless network interface 605 transmits the wireless packet to the target device 670. In this case, channel time must be allocated for data transmission.

As described above, since the IEEE 802.15.3 standard dictates that only a device that desires to send data ('sending device') be allowed to request channel time allocation (CTA), when a device that desires to eventually receive data ('receiving device') belongs to a different piconet than the sending device, a mechanism for performing CTA for data reception is needed.

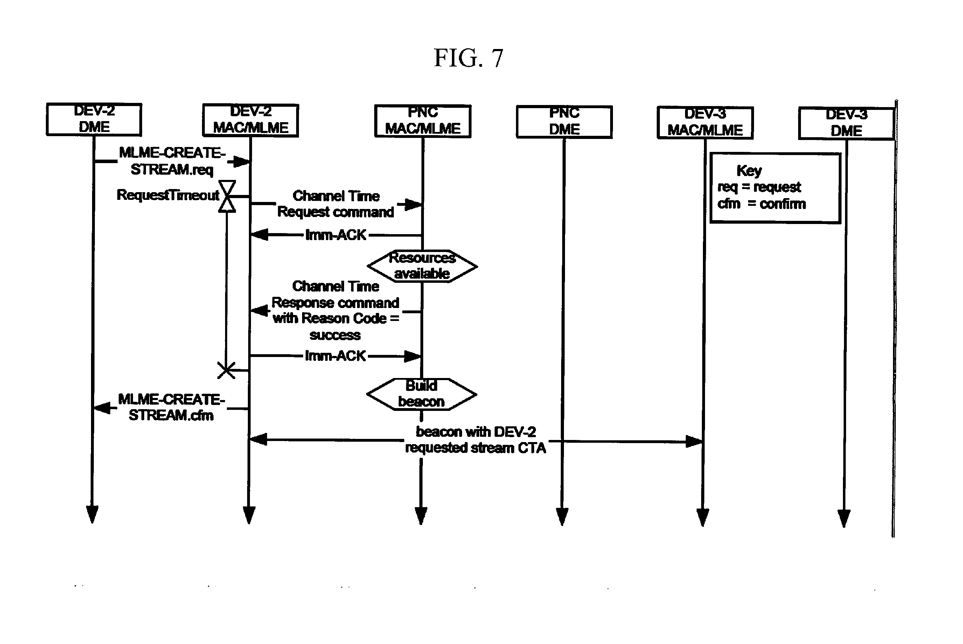

FIG. 7 is an exemplary diagram for explaining a CTA mechanism defined in the IEEE 802.15.3 standard. Unless otherwise specified, the process of operation and terms are based on the IEEE 802..15.3 standard. A device is hereinafter abbreviated to 'DEV'.

If DEV-2 intends to transmit a stream to DEV-3, a device management entity (DME) of the DEV-2 invokes a 'MLME-CREATE-STREAM.request' message generated by its Medium Access Control (MAC) Layer Management Entity (MLME). The structure of the 'MLME-CREATE-STREAM.request message' is as follows: 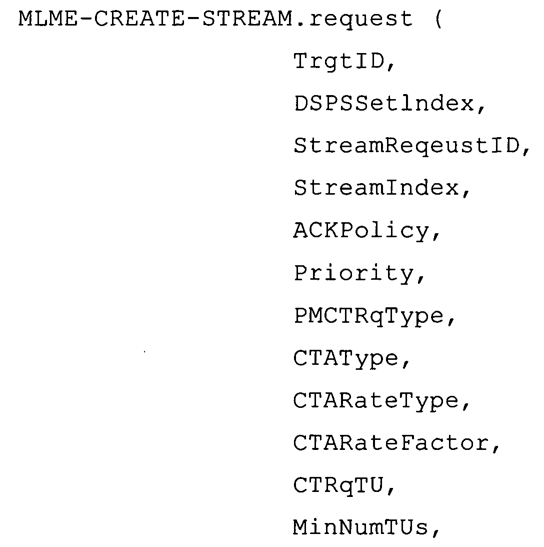 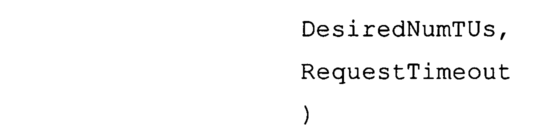 As is evident from the structure of the 'MLME-CREATE-STREAM.request' message, ID of the receiving device, i.e., DEV-3 to which the sending device desires to transmit data to is set in TrgtID. That is, only the sending device DEV-2 is permitted to request CTA by designating the receiving device DEV-3. Using other parameters, the DEV-2 notifies a piconet controller (PNC) of time slots required for streaming.

The MIME of the DEV-2 converts the invoked MLME-CREATE-STREAM.request message into a channel time request command for transmission to the PNC.

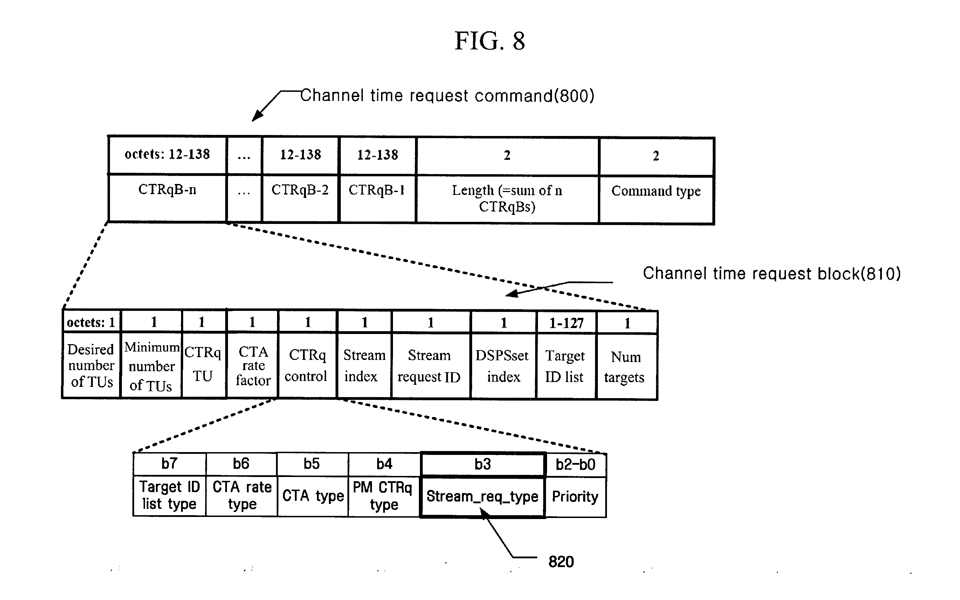

FIG. 8 shows a format of a channel time request command 800 defined in the IEEE 802.15.3 standard. Referring to FIG. 8, the channel time request command 800 is comprised of multiple channel time request blocks 810, each designating a receiving device with a Target ID.

A PNC that receives the channel time request command 800 checks whether a channel time is available for allocation and transmit the result to the DEV-2 using a channel time response command. When CTA is successfully performed, the DEV-2 transmits the stream to the DEV-3 during the allocated channel time.

Since the above-mentioned 'MLME-CREATE-STREAM.request' message contains only a 'TrgtID' parameter specifying a receiving device in addition to information needed for CTA, only a sending device is allowed to request channel time allocation due to this message structure. Thus, by attaching a parameter indicating whether a device that requests CTA is a sending or receiving device to the 'MLME-CREATE-STREAM.request' message, it is also possible for the receiving device to request CTA. In this case, before requesting the CTA, the receiving device receives various information needed for CTA from a middleware or application operating at a layer overlying a MAC layer.

In order to allow the receiving device to request CTA according to the illustrative embodiment, the structure of the 'MLME-CREATE-STREAM.request' message will be modified as follows: 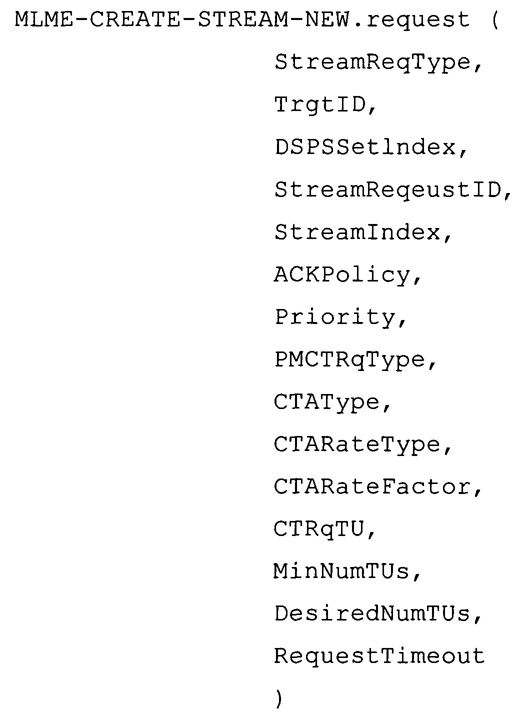 'StreamReqType' is a newly defined boolean parameter specifying whether a device requesting CTA is a sending device or a receiving device.

As the structure of the conventional 'MLME-CREATE-STREAM.request' message has been modified to the 'MLME-CREATE-STREAM-NEW.request' message, the format of a channel request command frame also needs to be modified in order for the receiving device to request CTA from a PNC. More specifically, referring to FIG. 8, each channel time request block 810 has 'CTRq control' information field with a 1-bit 'Reserved' area. The 1-bit 'Reserved' area is defined as a 'Stream_req_type' area 820 indicating whether a device that requests CTA is a sending or receiving device.

That is to say, use of the modified message and command structures allows the receiving device to request CTA.

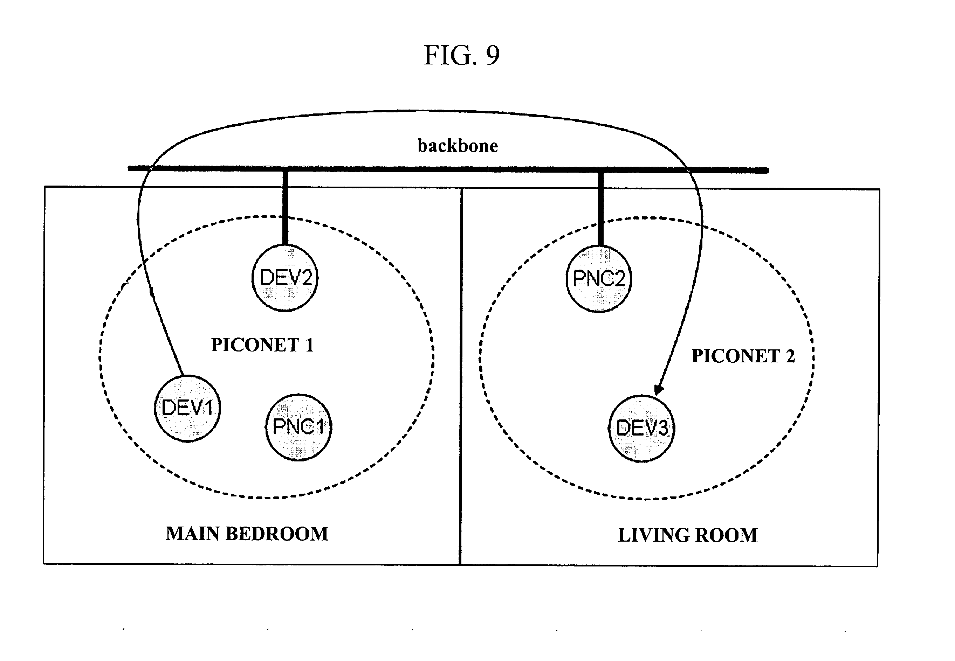

FIG. 9 is an exemplary diagram of a network system according to another embodiment of the present invention.

For example, if DEV1 in a main bedroom desires to send a stream to DEV3, the DEV1 cannot be directly assigned channel time required to send the stream to the DEV3 but is assigned indirectly through DEV2 and PNC2 since communication between the DEV1 and DEV is made through a backbone. Thus, the DEV1 first requests CTA from PNC1 to send the stream to DEV2. In this case, the 'StreamReqType' parameter in the 'MLME- CREATE- STREAM-NEW.request' message and the 'Stream_req_type' area in the 'CTRq control' information field of the channel time request block 810 must specify that the DEV1 that is a sending device that requests CTA.

When the DEV1 is assigned channel time by the PNC1, the DEV1 transmits the stream to the DEV2 during the assigned channel time. In this case, a destination device at a MAC layer is DEV2 while a destination device at an Application layer is DEV3.

The DEV2 transmits the stream to the PNC2 according to a protocol for the backbone, which then delivers the same to the DEV3.

In this case, the PNC2 must assign channel time in order to deliver the stream to the DEV3. However, since the PNC2 simply acts to relay the stream from the DEV2 to the DEV3, it is not aware of information about the amount of channel time required to transmit data to the DEV3. Thus, the DEV3 that is a receiving device requests CTA instead of the PNC2.

In this case, the 'StreamReqType' parameter in the 'MLME-CREATE-STREAM-NEW.request' message and the 'Stream_req_type' area in the 'CTRq control' information field of the channel time request block 810 must specify that the DEV3 that is the receiving device requests CTA.

Meanwhile, since the wired backbone and Piconet 1 and Piconet 2 can independently generate its own PNID information, as shown in FIG. 9, duplicate PNID information may be present. Thus, to prevent the creation of this duplicate PNID information, the DEV2 and PNC2 periodically broadcast a packet carrying ID information on Piconet 1 and Piconet 2 where they belong and device information and receive the broadcasted packet in order to store the same information in the form of tables or update the same. If the duplicate PNID exists, the appropriate PNID value may be modified using a predetermined method. For example, when the Piconet 1 and Piconet 2 have the same PNID value, the DEV2 may inform the PNC1 within the same piconet so as to change the appropriate PNID.

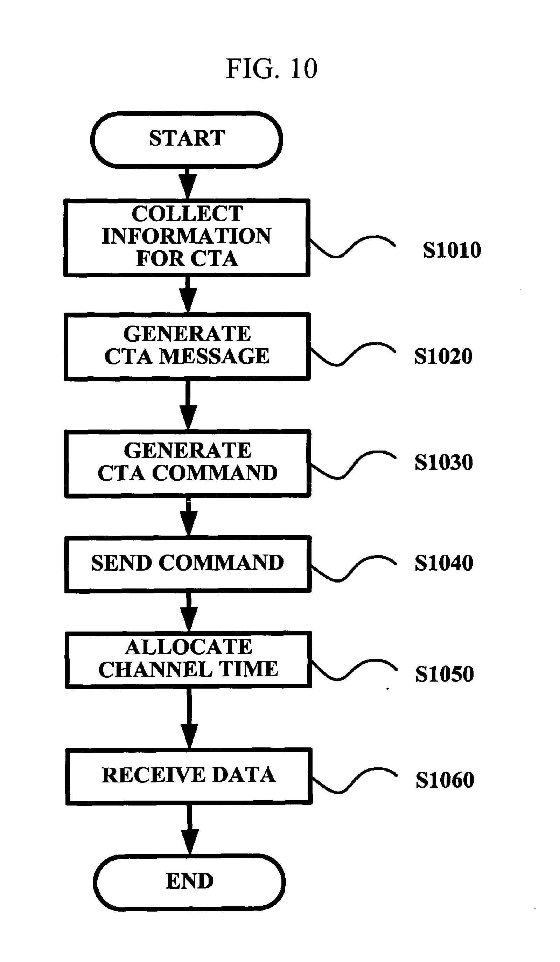

FIG. 10 is a flowchart illustrating a process for requesting CTA according to an exemplary embodiment of the present invention. Referring to FIG. 10, a receiving device requests CTA in order to receive data from a sending device.

More specifically, if the receiving device desires to receive data from a sending device within a different piconet, in step S1010, it collects information needed for CTA such as data transmission bandwidth from the sending device before receiving the data. The information can be collected through an application or middleware running on a layer above a MAC layer.

In step S1020, the receiving device internally invokes a message requesting CTA, e.g., the above-defined 'MLME-CREATE-STREAM-NEW.request' message and specifies in the 'StreamReqType' parameter that a device requesting the CTA is the receiving device. Upon invocation of the message, the receiving device generates a channel time request command indicating that the device requesting CTA is the receiving device in step S1030, which is then sent to a PNC within the same piconet in step S1040. The receiving device is able to request CTA from the PNC by specifying 'DestID' (516 of FIG. 5) as itself and 'SrcID' (518 of FIG. 5) as the PNC.

In step S1050, the PNC allocates channel time according to the CTA request received from the receiving device, and in step S1060, the receiving device receives data from the PNC during the allocated channel time.

While the present invention has been particularly shown and described with reference to exemplary embodiments thereof, it will be understood by those of ordinary skill in the art that various changes or modifications in form and details may be made therein without departing from the spirit and scope of the present invention as defined by the following claims.

As described above, according to an exemplary embodiment of the present invention, since a receiving device is allowed to request channel time allocation, data transmission and reception can be smoothly performed between wireless network devices belonging to different coordinator-based wireless networks.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for requesting channel time allocation in a coordinator-based wireless network, the apparatus comprising:
a device (670) including a controller (672) for generating a packet requesting channel time allocation required for reception of data from the coordinator; and a transceiver (674) that sends the generated packet to the coordinator;
wherein the packet comprises information identifying that the device sending the packet is also receiving the data.

2. The apparatus of claim 1, wherein the packet comprises a packet generated by invocation of a message requesting the channel time allocation.

3. The apparatus of claim 2, wherein the message comprises information identifying that the device sending the packet is the device receiving the data.

4. The apparatus of any preceding claim, wherein the packet comprises a wireless packet complying with the IEEE 802.15.3 standard.

5. The apparatus of claim 4, wherein the packet includes a frame body and a header, and wherein each of the frame body and the header includes an information field containing piconet identifier information.

6. The apparatus of claim 5, wherein one of the information fields specifies a designation piconet identification information, and the other one of the information fields specifies a source piconet identification information.

7. The apparatus of any preceding claim, wherein the transceiver (674) receives information needed for the channel time allocation.

8. A method for receiving data in a coordinator-based wireless network, the method comprising:
receiving information relating to data;
transmitting a packet requesting channel time allocation to the coordinator using the information; and
receiving the data from the coordinator during the allocated channel time.

9. The method of claim 8, wherein the packet comprises a packet generated by invocation of a message requesting the channel time allocation.

10. The method of claim 9, wherein the message comprises information identifying that the device sending the packet is the same device receiving the data.

11. The method of any one of claims 8 to 10, wherein the packet comprises a wireless packet complying with the IEEE 802.15.3 standard.

12. The method of claim 11, wherein the packet includes a frame body and a header, and wherein each of the frame body and the header includes an information field containing piconet identifier information.

13. The method of claim 12, wherein one of the information fields specifies a designation piconet identification information, and the other one of the information fields specifies a source piconet identification information.

14. A packet for use in a network, the packet comprising:
a frame body; and
a header;
wherein each of said frame body and said header includes an information field containing piconet identifier information.

15. The packet of claim 14, wherein the packet is a wireless packet compliant with the IEEE 802.15.3 standard.

16. The packet of claim 14 or claim 15, wherein one of the information fields specifies designation piconet identification information, and the other one of the information fields specifies source piconet identification information.

17. The packet of claim 16, wherein the header includes a reserved field, and wherein the reserved field contains information indicating which information field specifies the designation piconet identification information and which information field specifies the source piconet identification information.

18. The packet of claim 17, wherein the reserved field contains two bits of information.

19. The packet of claim 16 or claim 17, wherein the packet is a wireless packet compliant with the IEEE 802.15.3 standard.
